(19) Europäisches Patentamt / European Patent Office / Office européen des brevets

(11) **EP 2 040 360 B1**

(12) **EUROPÄISCHE PATENTSCHRIFT**

(45) Veröffentlichungstag und Bekanntmachung des Hinweises auf die Patenterteilung:
**19.01.2011  Patentblatt 2011/03**

(51) Int Cl.:
*H02M 1/32* (2007.01)    *H02P 29/00* (2006.01)

(21) Anmeldenummer: **08105365.4**

(22) Anmeldetag: **18.09.2008**

(54) **Verfahren und Vorrichtung zur Ansteuerung eines Elektromotors**

Method and device for controlling an electric motor

Procédé et dispositif de commande d'un moteur électrique

(84) Benannte Vertragsstaaten:
**DE FR GB**

(30) Priorität: **01.08.2008  DE 102008040922**
**24.09.2007  DE 102007045573**

(43) Veröffentlichungstag der Anmeldung:
**25.03.2009  Patentblatt 2009/13**

(73) Patentinhaber: **Robert Bosch GmbH**
**70442 Stuttgart (DE)**

(72) Erfinder:
• **Emde, Christoph**
**74211, Leingarten (DE)**
• **Schmidtlein, Andreas**
**71732, Tamm (DE)**
• **Baumgaertner, Rainer**
**74397, Pfaffenhofen (DE)**

(56) Entgegenhaltungen:
**EP-A- 1 067 669       DE-A1- 3 539 558**
**DE-A1-102007 003 737**

EP 2 040 360 B1

## Beschreibung

Stand der Technik

Die Erfindung betrifft ein Verfahren und eine Vorrichtung zur Ansteuerung eines Elektromotors mittels Pulsweitenmodulation.

Eine derartige Pulsweitenmodulationsansteuerung kann niederfrequent sein, was bis 100 Hz eine relativ preiswerte Lösung darstellt. Wird die Pulsweitenmodulationsfrequenz in einen nicht hörbaren hochfrequenten Ultraschallbereich von über 20 kHz gelegt, ist das mit erhöhten Kosten verbunden, zumal die dabei zu beachtenden EMV - Anforderungen (elektromagnetische Verträglichkeit) schwierig zu erfüllen sind, so dass dieses Verfahren bisher selten eingesetzt wird.

Die gebräuchlichen kostengünstigen Ansteuerungsverfahren erzeugen durch die damit verbundene niederfrequente Tastung der Pulsweitenmodulation elektromechanische Geräuschemissionen. Die dabei erzeugten Geräuschemissionen sind hochenergetisch und weisen eine schmale Bandbreite auf. Durch die schmale Bandbreite und die hohe Energie sind diese Geräuschemissionen vom menschlichen Gehöhr deutlich wahrnehmbar. Speziell wenn das Umgebungsgeräusch geringer ist, übertönt das störende schmalbandige Elektromotorengeräusch aufgrund der Pulsweitenmodulationsansteuerung die Umgebungsgeräusche, so dass es praktisch nicht möglich ist, dieses Störgeräusch zu ignorieren.

Die JP 2006191756 A beschreibt ein Steuerverfahren eines DC-Motors, wobei zur Rauschunterdrückung eine spektrale Diffusionsmodulation der PWM-Frequenz vorgenommen wird. Vorteile und Wirkungsweise der Erfindung

In der Offenleggschrift DE10 2007 003 737 A1 ist ein Verfahren zum Betreiben eines Elektrogeräts und ein Elektrogerät beschrieben, wobei das Gerät pulsweitenmoduliert betriebene Leistungselektronik umfasst und die PWM-Frequenz zeitabhängig moduliert wird.

Die Uffenlegungsschrift DE 35 39 558 A1 offenbart ein Verfahren und eine Schaltung zur Erzeugung einer Taktfrequenz für leistugselektronischt Geräte und Maschinen. Die Taktfrequenz wird in einer elektranischen Stellung in Form einer Wobbelfrequenz erzeugt. , wobei die Wobbelung vorzugsweise stochastisch erfolgt und die Wobbelfrequenz nur einen relativ geringen Anteil an der erzeugten Taktfrequenz beträgt.

Die Schrift EP 1067668 A2 beschreibt einen Wechselrichter zum Erzeugen einer Wellenform zur Pulsweilenmodulation (PWM), indem eine Sinuswelle und eine Dreieckwelle zum Ansteuern eines Elektrormotors verglichen werden, wobei der Wechselrichter Mittel zum Erzeugen einer Dreieckwelte umfasst und wobei die Mittel zum Erzeugen einer Dreieckwelle eine Einstelleinrichtung (6) zum Einstellen einer Grundträgerfrequenz anfassen, so dass ein von dem Motor erzeugter elcktromagnetischer Ton in einem Audiofrequenzbereich liegt

Erfindungsgemäß werden ein Verfahren zur Ansteuerung eines Elcktromotors mittels pulsweitenmodulierten Ansteuerungssignalen nach Anspruch 1 sowie eine entsprechende Vorrichtung nach Anspruch 13 vorgesehen.

Das erfindungsgemäße Verfahren zum Ansteuern eines Elektromotors mittels Pulsweitenmodulation umfasst folgende Schritte. In einem Schritt wird wenigstens ein Parameter, der das während der Ansteuerung vorliegende Spektrum von Umgebungsgeräuschen des Elektromotors repräsentiert oder beeinflusst erfasst. In einem weiteren Schritt werden Ansteuerpulse mit einem Sol-Tastverhältnis und zeitlich variierenden Pulsweiten und Pulsabständen in Abhängigkeit von dem erfassten Parameter erzeugt. In einem weiteren Schritt wird der Elektromotor mittels der Ansteuerpulse angesteuert. Dabei ist der Parameter ein Betriebsparamater einer Brennkraftmaschine oder eines Fahrzeugs.

Die erfindungsgemäße Vorrichtung zum Ansteuern eines Elektromotors mittels Pulsweitenmodulalation umfasst eine Einrichtung zum Erzeugen von Ansteuerpulsen mit einem Soll-Tastverhältnis und zeitlich variierenden Pulsweiten und Pulsabständen. Die Vorrichtung weist einen Eingang zum Empfangen eines Betriebsparameters einer Brennkraftmaschine oder eines Fahrzeugs auf, wobei die Vorrichtung dazu ausgebildet ist, die Putsweiten und Pulsabstände abhängig von dem Betriebsparameter zu variieren.

In einer bevorzugten Ausführungsform wird als Betriebsparameter eine Drehzahl eines Antriebs der Brennkraftmaschine, oder eine Geschwindigkeit des Fahzeugs oder eine Beschleunigung des Fahrzeugs verwendet.

In einer weiteren bevorzugten Ausführungsform wird als Betriebsparameter das Ausführen einer ESP oder ABS- Steuerung oder aber das Ausführen einer festgelegten Funktion insbesondere einer Komfortfunktion verwendet.

Bevorzugte Weiterbildungen sind Gegenstand der jeweiligen Unteransprüche.

Der Elektromotor kann beispielsweise ein Gleichstrom- oder Wechselstrommotor mit Kommutator oder ein Wechselstrommotor ohne Kommutator sein. Ferner kann der Elektromotor ein rotatorischer Motor oder ein Linearmotor sein.

Dabei lässt sich durch Variation der zeitlichen Abstände der Ansteuerpulse, d.h. durch eine Variation der Pulsweitenmodulationsfrequenz eine Verschiebung des Schallemissionsspektrums des Elektromotors, insbesondere in Richtung an ein Schallemissionsspektrum von Umgebungsgeräuschen erreichen.

Durch die erfindungsgemäße Variation der Pulsweitenmodulationsfrequenz ist es möglich, das Schallemissionsspektrum des Elektromotors an ein Schallemissionsspektrum von Umgebungsgeräuschen in vorteilhafter Weise so anzupassen, dass die Geräuschemissionen des Elektromotors praktisch nicht von den Umgebungsgeräuschen zu unterscheiden sind und somit der durch Variation der Pulsweitenmodulationsfrequenz gesteuerte Elektromotor auch keine schmalbandigen hochenergetischen Geräuschpegel erzeugt, so dass die Schallbelastung vermindert ist.

Die schmalbandige Geräuschemission des gesteuerten Elektromotors, wie sie bei fixierter Pulsweitenmodulationsfrequenz im hörbaren Bereich auftritt, wird erfindungsgemäß durch eine Anpassung an das Schallfrequenzaufkommen der Umgebung ersetzt, wodurch das Schallemissionsspektrum des Elektromotors nahezu vollständig durch die Umgebungsgeräusche verdeckt wird. Somit gestaltet die Erfindung die Motoransteuerung auf eine Art und Weise, dass die durch die Tastung bei der Pulsweitenmodulation erzeugten Geräuschemissionen besser in einem Umgebungsgeräusch versteckt werden können.

Gemäß eines nicht beanspruchten Beispiels kann durch eine vorher erfolgte Schallfrequenzanalyse der Umgebungsgeräusche eine Motoransteuerung realisiert werden, deren Geräuschemissionen direkt auf das Geräuschspektrum der Umgebung zugeschnitten ist und damit von einem Umgebungsgeräusch nicht nur maskiert wird, sondern für das menschliche Ohr von diesen Umgebungsgeräuschen nicht mehr unterscheidbar ist. Damit weicht die Erfindung deutlich von den gebräuchlichen Motoransteuerungskonzepten, die zumindest zeitweise auf einer festen Pulsweitenmodulationsfrequenz beruhen, ab, wobei die Modulation der Ansteuerung über das Einstellen des Pulsweitentastverhältnisses (PWM-duty) erfolgt.

Die Erfindung basiert somit einerseits auf der Modulation der Ansteuerung über das Einstellen des Pulsweitenmodulationstaktverhältnisses und zusätzlich wird die Pulsweitenmodulationsfrequenz so moduliert, dass die durch die Tastung erzeugten elektromagnetisch generierten Geräuschemissionen und vorzugsweise die EMV - Emissionen ein gewünschtes Spektralverhältnis und Schallemissionsspektrum aufweisen.

Auf diese Weise ist ein vorhersehbares und anpassbares Emissionsverhalten erreichbar. Besonders im Kfz-Bereich unterscheiden sich die Fahrzeugumgebungen deutlich voneinander, wie beispielsweise von Dieselfahrzeugen, Benzinern oder Elektrofahrzeugen, wodurch die Anpassbarkeit des erfindungsgemäßen Verfahrens eine vorteilhafte Funktionalität ermöglicht.

In einer Ausführungsform der Erfindung entspricht das Schallemissionsspektrum des Elektromotors durch die Variation der Pulsweitenmodulationsfrequenz einem Schallemissionsspektrum einer Umgebung, die durch einen Verbrennungsmotor beherrscht wird, wie es bei Kraftfahrzeugen häufig der Fall ist. Außerdem kann das Verfahren in Fahrzeugen für eine ESP oder ABS Steuerung vorteilhaft verwendet werden.

Ferner kann das Schallemissionsspektrum des Elektromotors durch die Variation der Pulsweitenmodulationsfrequenz den Fahr- und Abrollgeräuschen eines Fahrzeugs wie z.B. eines Autos, Motorrads, Flugzeugs oder eines Schiffes oder elektromotorbetriebenen Schienenfahrzeugen wie Untergrundbahnen, Straßenbahnen, Stadtbahnen oder Elektrobussen entsprechen. Bei derartigen Fahrzeugen sind die Schallemissionen der mittels einer fixen Pulsweitenmodulationsfrequenz angesteuerten Elektromotoren besonders prägnant, was durch Variation der Pulsweitenmodulationsfrequenz des Elektromotors gemildert werden kann.

Weiterhin ist es von Vorteil bei der Variation der Pulsweitenmodulationsfrequenz eine Flankensteilheit des Pulsweitenmodulationssignals im Vergleich zu mit mehr als 20 kHz betriebenen Systemen zu reduzieren, wodurch die EMV (elektromagnetische Verträglichkeit) deutlich verbessert wird, da die durch steile Flanken verursachte elektromagnetische Störstrahlung in Bezug auf die elektromagnetische Verträglichkeit (EMV) vermindert wird.

In einem weiteren nicht beanspruchten Beispiel wird ein Umgebungsparameter erfasst, der das während der Ansteuerung vorliegende Umgebungsgeräusch repräsentiert, und darauf basierend das Umgebungsgeräuschspektrum ermittelt. Die Modulation der Pulsabstände erfolgt so, dass die Verteilung der Pulsabstände der Verteilung des ermittelten Umgebungsgeräuschspektrums entspricht, wobei sich das Soll-Tastverhältnis vorzugsweise nicht oder nur marginal verändert. Im Zusammenhang mit dem Soll-Tastverhältnis sollte zudem erwähnt werden, dass dies entweder vorgegeben oder anhand vorgegebener Kriterien erfasst bzw. ermittelt werden kann.

Beispiele für den Umgebungsparameter erfasst, der das während der Ansteuerung vorliegende Umgebungsgeräusch repräsentiert, sind die Fahrzeuggeschwindigkeit, die Antriebsdrehzahl, die Beschleunigung, die Fahrsituation (ABS-, ESP-Betrieb, Komfortfunktion (z.B. Bremsscheibenwischer o. ä.), ein Mikrofon oder eine geographische Position (z.B. Straßenbelagseigenschaft über GPS).

Bei noch einer weiteren Ausführungsform wird die Modulation der Pulsabstände zusätzlich abhängig gemacht von einer Leistungsanforderung des Motors und/oder der thermischen Belastung seiner Komponenten bzw. seiner Ansteuerung. Die physikalischen Gegebenheiten bei der Ansteuerung von Elektromotoren sehen in den meisten Fällen derart aus, aus der Sicht von Geräusch und Regelbarkeit eine Ansteuerung mit höheren Ansteuerfrequenzen erwünscht ist, was in der Regel zu einer höheren Verlustleistung führt. Um bei der thermischen Auslegung des Motorpfads kostenoptimal vorgehen zu können, erfolgt daher ein Kompromiss in derart, dass eine geräuschoptimale Ansteuerung nur in bestimmten Situationen bzw. über begrenzte Zeiträume durchgeführt wird. Insbesondere wird sich in Situationen mit niedriger thermischer Belastung eine bessere Geräuschperformance als in Situationen hoher thermischer Belastung erzielen lassen.

Die Erfindung wird nun anhand der beigefügten Figuren näher erläutert.

Kurze Beschreibung der Figuren

Figur 1     zeigt ein schematisches Blockschaltbild einer Motoransteuerung gemäß einer ersten Ausführungsform der Erfindung;

Figur 2     zeigt vergleichende schematische Diagramme von Motor-Ansteuerungssignalen;

Figur 3     zeigt vergleichende schematische Diagramme von Frequenzanalysen der Ansteuerungssignale;

Figur 4     zeigt weitere vergleichende schematische Diagramme von Frequenzanalysen der Ansteuerungssignale;

Figur 5     zeigt in einer schematischen Darstellung ein Fahrzeug mit einem Elektromotor und einem Steuergerät gemäß einer zweiten Ausführungsform der vorliegenden Erfindung;

Figur 6     zeigt einen schematischen Programmablauf zur Ansteuerung des Elektromotors durch das Steuergerät nach Fig. 5;

Figur 7     zeigt zum Vergleich ein normales Ansteuerverfahren und ein Ansteuerverfahren des Elektromotors gemäß einer dritten Ausführungsform der vorliegenden Erfindung;

Figur 8     zeigt ein schematisches Blockdiagramm einer Motoransteuerung gemäß einer vierten Ausführungsform der vorliegenden Erfindung;

Figur 9     zeigt ein schematisches Blockdiagramm einer Motoransteuerung gemäß einer fünften Ausführungsform der vorliegenden Erfindung;

Figuren 10a,b     zeigen zum Vergleich Parameter unterschiedlicher erfasster Umgebungsgeräuschprofile und daraus abgeleitete Ansteuerspektren; und

Figur 11     zeigt ein schematisches Blockdiagramm einer Motoransteuerung gemäß einer sechsten Ausführungsform der vorliegenden Erfindung.

Erläuterung der Figuren im Detail

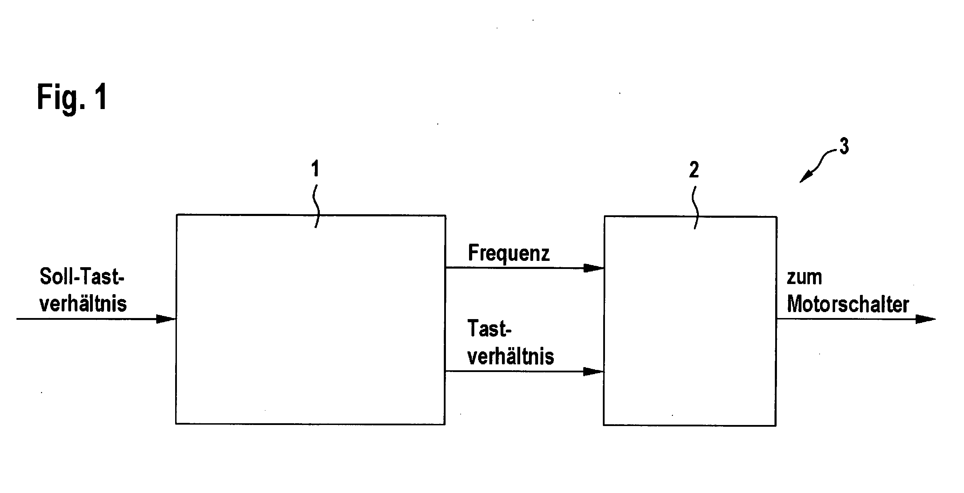

Figur 1 zeigt ein schematisches Blockdiagramm einer Motoransteuerung 3 eines Elektromotors gemäß einer ersten Ausführungsform der Erfindung.

Zunächst wird in einem Schaltungsblock 1 ein Soll-Ansteuerungsemissionsspektrum bereitgestellt, das beispielsweise durch eine Schallanalyse der Umgebungsgeräusche gewonnen wird. Alternativ oder zusätzlich können unterschiedliche Schallemissionsspektren beispielweise von Verbrennungsmotoren oder von Fahr- und Abrollgeräuschen von Fahrzeugen als Soll-Ansteuerungsemissionsspektren in Tabellenform gespeichert vorliegen. Dabei kann ein Speicher vorgesehen sein, in dem verschiedene Schallemissionsspektren abgelegt sind. Beispielsweise kann für verschiedene Motortypen wie z.B. Die-sel-, Elektro- oder Benzinmotoren ein entsprechendes Schallemissionsspektrum abgespeichert sein, das bei der Wahl der Pulsweitenmodulationsfrequenzen berücksichtigt wird. Zudem kann der Betriebszustand eines Fahrzeugs insbesondere die Motordrehzahl, die Geschwindigkeit oder der Straßenzustand bei der Wahl der Pulsweitenmodulationsfrequenz berücksichtigt werden.

Dem Schaltungsblock 1 wird ein Soll-Tastverhältnis auch "Duty" genannt zur Modulation der Motorleistung zugeführt. Abhängig von dem Soll-Tastverhältnis und dem gewünschten Soll-Ansteuerungsemissionsspektrum, wie es in Tabellenform gespeichert ist und/oder über Tabellen in Zusammenwirken mit einem Zufallsgeneratoren vorgegeben ist, wird eine Variation der Pulsweitenmodulationsfrequenz in Verbindung mit entsprechenden Werten des Tastverhältnisses einem Schaltungsblock 2 zugeführt.

In dem Schaltungsblock 2 wird eine Variation der Pulsweiten und Pulsabstände erzeugt und anschließend eine Pulsweitenmodulationsfrequenzfolge bzw. -sequenz einem Motorschalter zur Ansteuerung des Elektromotors zugeführt wird.

Die Basis der Variation der Pulsweiten und Pulsabstände beruht auf der Konstruktion eines gewünschten Spektralverhaltens $Spec_{Gesamt}$ aus der Gesamtheit der Spektren der eingestellten Pulsweitenmodulationsfrequenzen Spec($f_{pwm}$(i))

$$(1)\ \text{Spec}_{\text{Gesamt}} = (\Sigma\alpha_i \cdot \text{Spec}(f_{pwm}(i))\ \text{mit}\ \alpha_i\ \text{als Gewichtung.}$$

Wächst das abgestrahlte Spektrum zu einer einzelnen Pulsweitenmodulationsfrequenz zusammen, kann Spec($f_{pwm}$(i)) z.B. durch eine Messung ermittelt werden. Darüber hinaus können die einzelnen Übertragungsfunktionen modelliert werden und die Pulsweitenmodulationsfrequenz Spec($f_{pwm}$(i)) modellgestützt berechnet werden. Eine Bestimmung der Gewichtung $\alpha_i$ kann als Rückrechnung mit Hilfe der nachfolgenden Formel (2) aus dem gewünschten Spektrum erfolgen.

$$(2)\ \text{Spec}_{\text{Gesamt}} = (\Sigma\alpha_i \cdot \text{Spec}(f_{pwm}(i))) = \text{Spec}_{\text{Soll}} = \Sigma\beta_j \cdot \text{Spec}(f(j))$$

Eine detaillierte Konstruktion der Gewichtung $\alpha_i$ mit Gleichung (2) und die anschließende Gleichverteilung der Pulsweitenmodulationsansteuerfrequenz in einem Zeitbereich kann zu Systemen mit maßgeschneiderten Schallemissionsspektren führen, die dann durch Tabellen und/oder Tabellen und Zufallsgeneratoren realisiert werden.

Dabei kann im einfachsten Fall eine gleich verteilte Gewichtung $\alpha_i$ gewählt werden. Das sich ergebende Schallemissionsspektrum wird dabei in der Regel nicht weiß sein, zumal die Pulsweitenmodulationsfrequenzen Spec($f_{pwm}$(i)) in realen Komplettsystemen gefaltet sind. In bestimmten Fällen kann ein Ansatz mit gleich verteilter Gewichtung $\alpha_i$ ausreichen. Durch die Variation der Pulsweitenmodulationsfrequenz werden abhängig von einem Soll-Tastverhältnis und dem gewünschten Soll-Ansteuerungsemissionsspektrum Frequenzwerte und Tastverhältniswerte in dem Schaltungsblock 2 für die Pulsweitenmodulation der Motoransteuerung erzeugt und zu einem Motorschalter weitergeleitet.

Bei einer Motoransteuerung mit einer variablen Pulsweitenmodulationsfrequenz ist eine aktive Geräuschanpassung möglich, so dass weniger schmalbandige Anteile im Schallemissionsspektrum enthalten sind. Das Elektromotorengeräusch wird subjektiv als weniger störend empfunden, weil es von den normalen Fahrgeräuschen schwer zu unterscheiden ist.

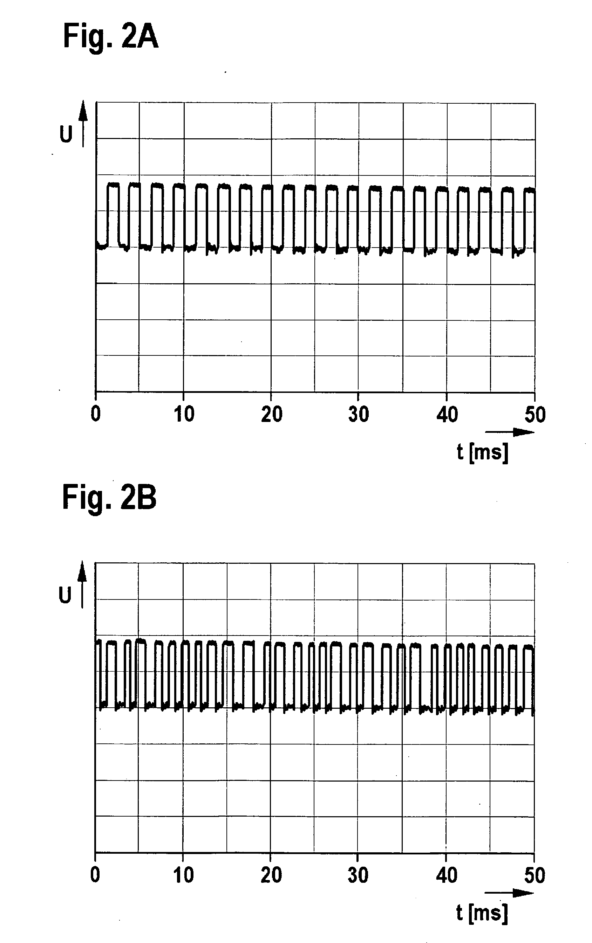

Figur 2 zeigt vergleichende schematische Diagramme von Elektromotoransteuerungen. Dazu zeigt Figur 2A eine Motoransteuerung mit einer festen Pulsweitenmodulationsfrequenz von 400 Hz. Bei diesem Oszillogramm ist auf der Abszisse die Zeit t in Millisekunden und auf der Ordinate die Spannung U angegeben. Die fixe Pulsweitenmodulationsfrequenz von 400 Hz ist an den völlig gleichförmigen, zeitlich aufeinander folgenden Pulsen zu erkennen. Dabei wird hier beispielsweise ein Tastverhältnis von 50 % eingehalten. Dieses Tastverhältnis von 50 % wird auch in Figur 2B gezeigt, jedoch ist hier die Pulsmodulationsfrequenz variabel, was an den unterschiedlichen Zeitintervallen einzelner Pulsfolgen zu erkennen ist. Während ein Motor, der mit Ansteuersignalen gemäß Figur 2A angesteuert wird, deutliche schmalbandige Geräuschemissionen verursacht, verursacht ein Motor, der mit Signalen gemäß Figur 2B angesteuert wird, Geräusche, die von den Umgebungsgeräuschen überdeckt werden. Dieses wird mit den nachfolgenden Figuren noch deutlicher gezeigt.

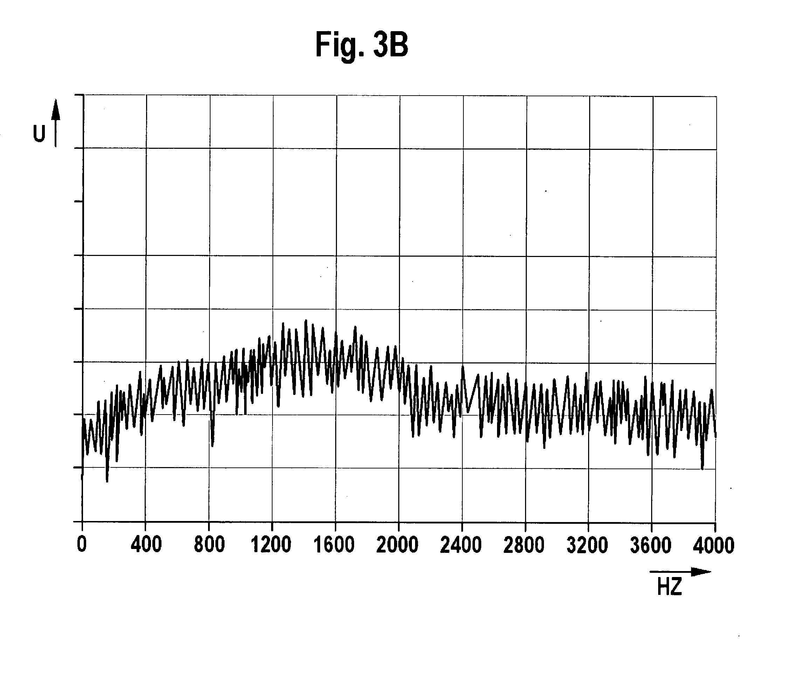

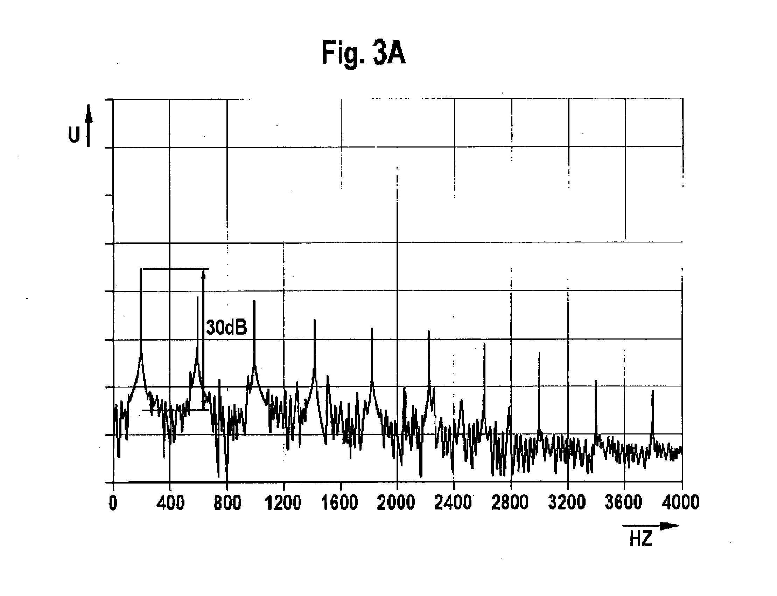

Figur 3 zeigt vergleichende schematische Diagramme von Frequenzanalysen der Ansteuerungssignale. Dazu zeigt Figur 3A eine Ansteuerung mit einer fixen Pulsweitenmodulationsfrequenz von 200 Hz. Auf der Abszisse wird wieder die Frequenz in Hz aufgeführt, während die Ordinate die elektrische Spannung als Ansteuersignal angibt. Während in Figur 3A mit 200 Hz für das Ansteuerungssignal deutliche Spitzen mit Amplituden von 30 dB - und damit deutlich hörbar - zu erkennen sind, wird durch die Variation der Pulsweitenmodulationsfrequenz, wie es Figur 3B zeigt, ein Spektrum erreicht, das in etwa dem normalen Schallemissionsspektrum eines fahrenden Fahrzeugs entspricht, wobei die maximale Amplitudendifferenz lediglich 18 dB beträgt.

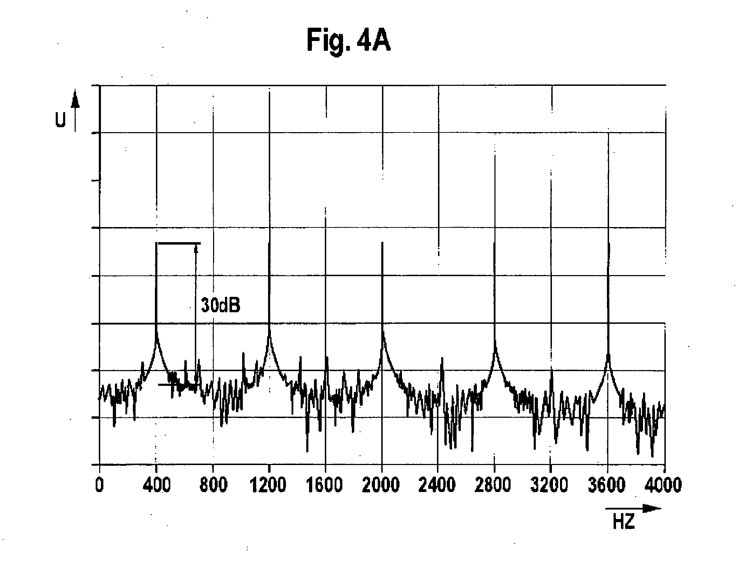

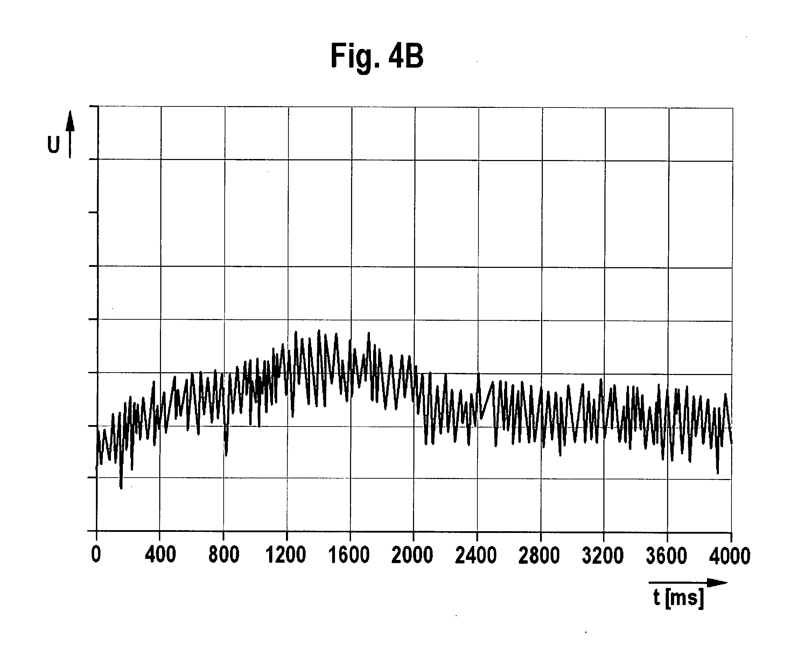

Figur 4 zeigt weitere vergleichende schematische Diagramme von Frequenzanalysen der Ansteuerungssignale. In Figur 4A wird die Ansteuerung mit einer festen Pulsmodulationsfrequenz von 400 Hz und die damit verbundenen elektrischen Spannungen und Frequenzen des Ansteuersignals gezeigt, wobei sich wiederum an den charakteristischen Stellen für 400 Hz eine Amplitude von etwa 30 dB deutlich erkennbar ist, die sich vom Untergrund und damit von den Umgebungsschallemissionen abhebt. Demgegenüber zeigt Figur 4B, wie bereits in Figur 3B gezeigt, ein Spannungsspektrum des Ansteuersignals, das keine schmalbandigen charakteristischen Spitzen aufweist, da hier die Lehren der Erfindung durch Variation der Pulsweitenmodulationsfrequenz vorteilhaft eingesetzt werden. Beispielsweise können Frequenzen für die Pulsweitenmodulation im Bereich zwischen 1 kHz und 6 kHz verwendet werden.

Mit der erfindungsgemäßen Variation der Frequenz der Pulsweitenmodulation wird die Erzeugung von akustischen Signalen durch den Elektromotor mit einer Frequenzbreite kleiner als 300Hz vermieden. Vorzugsweise werden akustische Signale des Elektromotors mit einer Frequenzbreite kleiner als 200Hz bei der Ansteuerung des Elektromotors durch die Variation der Pulsweitenmodulationsfrequenz vermieden.

In einer weiteren Ausführungsform wird die Erzeugung akustischer Signale mit einer Frequenzbreite kleiner als 10Hz beim Betrieb des Elektromotors durch die Variation der Pulsweitenmodulationsfrequenz vermieden.

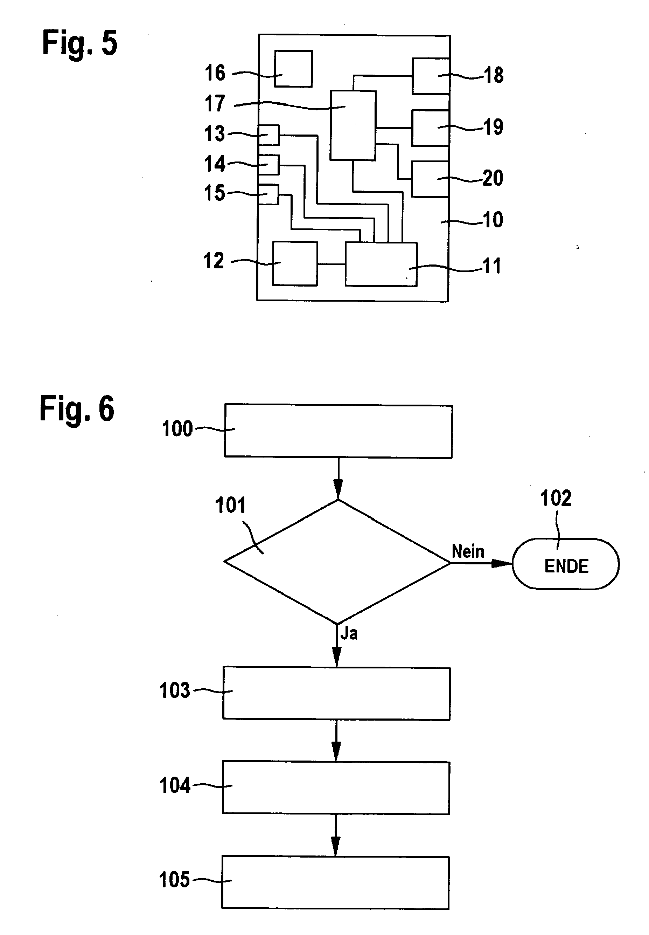

Figur 5 zeigt in einer schematischen Darstellung ein Fahrzeug 10, das ein Steuergerät 11 gemäss einer zweiten Ausführungsform der vorliegenden Erfindung aufweist.

Das Steuergerät 11 steht mit einem Datenspeicher 12 in Verbindung. Im Datenspeicher 12 sind Steuerprogramme und Daten und/oder Tabellen für die Festlegung einer Variation der Frequenz eines pulsweitenmodulierten Ansteuersignals, d.h. die zeitlichen Abstände und Breiten der Ansteuerpulse des Elektromotors abgelegt. Weiterhin verfügt das Fahrzeug 10 über einen ersten, einen zweiten und einen dritten Sensor 13, 14 und 15. Beispielsweise kann als erster Sensor 13 ein Drehzahlsensor, als zweiter Sensor 14 ein Geschwindigkeitssensor und als dritter Sensor 15 ein Beschleunigungssensor vorgesehen sein.

Anstelle der dargestellten Sensoren können auch andere Sensoren vorgesehen sein, die einen Betriebsparameter des Fahrzeugs, insbesondere einen Betriebsparameter eines Antriebs 16 des Fahrzeugs 10, erfassen und an das Steuergerät 11 weiterleiten. Als Antrieb 16 kann eine Brennkraftmaschine, ein Hybridantrieb oder ein Elektroantrieb vorgesehen sein. Das Fahrzeug 10 kann in Form eines Autos, Motorrads, Schienenfahrzeugs, Flugzeugs oder eines Schiffes ausgebildet sein. Des weiteren ist ein Elektromotor 17 vorgesehen, der mit Stellgliedern 18, 19, 20 verbunden ist. Der Elektromotor steht zudem mit dem Steuergerät 11 in Verbindung. Abhängig von der Ansteuerung durch das Steuergerät 11 stellt der Elektromotor 17 eine entsprechende Steuerung der Stellglieder 18, 19, 20 durch. Beispielsweise kann als erstes Stellglied 18 ein Bremssystem vorgesehen sein. Zudem kann als zweites Stellglied 19 ein elektronisches Stabilitätssystem vorgesehen sein. Zudem kann als drittes Stellglied 20 ein elektronisches Dämpfungssystem vorgesehen sein.

Die Funktionsweise der Anordnung gemäß Fig. 5 wird anhand des Ablaufsprogramms der Figur 6 erläutert.

Bei Programmpunkt 100 überprüft das Steuergerät 11, ob eine Vorgabe zur Ansteuerung des Elektromotors 17 von einem Steuerprogramm, das beispielsweise im Datenspeicher 12 abgelegt ist, vorgegeben wird. Bei Vorgabe einer Ansteuerung des Elektromotors 17 prüft das Steuergerät 11 bei einem folgenden Programmpunkt 101, ob es sich bei der Funktion, zu dessen Zweck der Elektromotor angesteuert werden soll, um eine festgelegte Funktion handelt. Die festgelegten Funktionen können beispielsweise als Vergleich im Datenspeicher 12 abgelegt sein. Abhängig von der gewählten Ausführungsform können festgelegte Funktionen Komfortfunktionen umfassen. Als nicht festgelegte Funktionen können Funktionen angesehen werden, die mit der Sicherheit des Betriebs des Fahrzeugs 10 zusammenhängen. Dies ist beispielsweise eine Bremsanforderung unter Einsatz eines Antiblockiersystems. Erkennt das Steuergerät bei Programmpunkt 101, dass die angeforderte Funktion, zu deren Zweck der Elektromotor 17 angesteuert werden soll, sich um eine nicht festgelegte Funktion, beispielsweise um eine Notbremsung handelt, so wird nach Programmpunkt 102 verzweigt. Beim Programmpunkt 102 führt das Steuergerät 11 eine Ansteuerung des Elektromotors 17 in einer festgelegten Art und Weise durch, wobei mit Hilfe eines pulsweitenmodulierten Ansteuersignals der Elektromotor 17 angesteuert wird. Bei dieser Ansteuerung wird die Frequenz der Ansteuersignale, d.h. der zeitliche Abstand zwischen den Ansteuerpulsen nicht variiert.

Ergibt die Abfrage des Steuergeräts 11 bei Programmpunkt 101, dass es sich bei der angefragten Funktion um eine der festgelegten Funktionen, beispielsweise um eine Komfortfunktion handelt, so wird nach Programmpunkt 103 verzweigt. Beispielsweise kann als Komfortfunktion ein aktives Bremsscheibenwischen angefordert werden. Dabei besteht die Aufgabe des Elektromotors darin, langsam anzulaufen mit geringer Energie Bremsbeläge an die Bremsscheiben anzulegen und dadurch Wasser von der Oberfläche der Bremsscheibe zu entfernen. Anschließend wird der Elektromotor wieder abgeschaltet, wobei dies möglichst unhörbar für einen Benutzer des Fahrzeugs durchgeführt werden soll. Anstelle der beschriebenen Komfortfunktion können auch andere Komfortfunktionen, wie z.B. eine Schiebedachfunktion oder eine Scheibenreinigungsfunktion o.ä., eingesetzt werden.

Bei Programmpunkt 103 erfasst das Steuergerät 11 Betriebsparameter des Fahrzeugs. Die Betriebsparameter können beispielsweise eine Drehzahl des Antriebs 16, eine Geschwindigkeit des Fahrzeugs 10 oder ein Signal eines Beschleunigungssensors 15 darstellen. Die Betriebsparameter des Fahrzeugs sind in der Weise ausgewählt, dass abhängig von dem Betriebsparameter eine Aussage über eine Schallemission des Fahrzeugs und/oder eine Schallemission der Umgebung möglich ist. Beispielsweise ist bei einer erhöhten Drehzahl auch eine erhöhte Schallabgabe des Antriebs 16, bei einer erhöhten Geschwindigkeit des Fahrzeugs erhöhte Windgeräusche und bei einem großen Signal des Beschleunigungssensors eine erhöhte Vibration, beispielsweise des Fahrzeugs in Bezug auf eine Straße und damit auch eine erhöhte Schallemission gegeben.

Anschließend wird zu Programmpunkt 104 verzweigt. Bei Programmpunkt 104 liest das Steuergerät 11 abhängig von wenigstens einem Betriebsparameter aus dem Datenspeicher 12 wenigstens ein Datum und/oder eine Tabelle für die Variation der Pulsweitenmodulationsfrequenz, d.h. für die Variation der zeitlichen Abstände der Steuerpulse aus. Anschließend steuert das Steuergerät 11 den Elektromotor 17 bei Programmpunkt 105 gemäß der ausgelesenen Tabelle und/oder des ausgelesenen Datums in der Weise an, dass zeitliche Abstände der Ansteuerpulse des Elektromotors 17 variiert werden. Der Datenspeicher 12 enthält beispielsweise eine zwei- oder mehrdimensionale Look-Up-Tabelle bzw. Nachschlagetabelle, in der zu mehreren verschiedenen Werten oder Wertebereichen des wenigstens einen Betriebsparameters je eine zeitliche Variation der Pulsweitenmodulationsfrequenz abgelegt ist.

Abhängig von der gewählten Ausführungsform kann auf die Programmpunkte 103 und 104 verzichtet werden, wobei bei Programmpunkt 105 das Steuergerät 11 auf ein festgelegtes Verfahren zur Variation der zeitlichen Abstände der Ansteuerpulse zurückgreift, die unabhängig von den Betriebsparametern sind.

In einer Ausbildungsform des Verfahrens wird eine Pulsmodulationsfrequenz, mit der der Elektromotor 17 angesteuert wird, gegenüber einem üblichen Ansteuerverfahren erhöht, wodurch zwar die elektrische Verlustleistung vergrößert wird, jedoch die Geräuschemission des Elektromotors und/oder der vom Elektromotor angesteuerten Stellglieder 18, 19, 20 reduziert wird.

In einer weiteren Ausführungsform kann zur Durchführung der Variation der zeitlichen Abstände der Ansteuerpulse vom Steuergerät 11 überprüft werden, ob die vom Elektromotor 17 angeforderte Leistung unter einer festgelegten Leistungsschwelle liegt. Beispielsweise kann die Leistungsschwelle mit 80% der maximalen Leistung des Elektromotors 17 festgelegt sein. Auf diese Weise wird sicher gestellt, dass die Variation der Frequenz des Pulsweitenmodulationssignals nur dann durchgeführt wird, wenn eine festgelegte Teilleistung vom Elektromotor 17 angefordert wird. Damit wird erreicht, dass sicher gestellt wird, dass die Funktionsfähigkeit der Ansteuerung des Stellgliedes nicht beeinträchtigt wird.

In einem weiteren Ausführungsbeispiel kann bei Programmpunkt 103 als Betriebsparameter die von dem Elektromotor angeforderte Leistung erfasst werden. Liegt die angeforderte Leistung unter einer festgelegten Leistungsschwelle, die zwischen 80% und 10% der Maximalleistung des Elektromotors liegen kann, so wird eine Variation der zeitlichen Abstände der Ansteuerpulse angeführt.

Das oben anhand der Figur 6 dargestellte Verfahren kann in einem Steuergerät, wie es oben anhand der Figur 5 dargestellt wurde, vollständig in Software oder Firmware, vollständig in Hardware oder teils in Hardware und teils in Software oder Firmware realisiert sein.

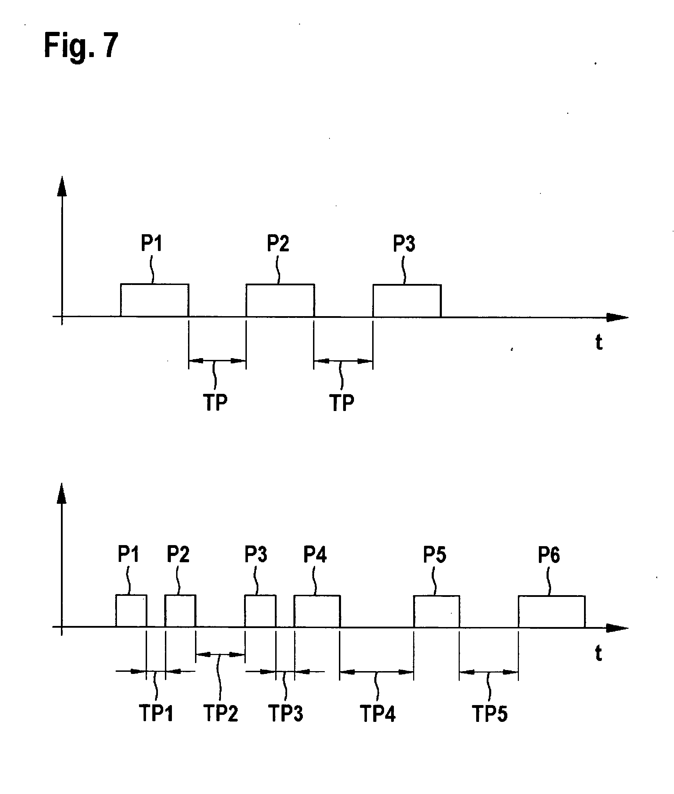

Figur 7 zeigt in einer schematischen Darstellung einen Vergleich eines regulären Ansteuersignals in einem oberen Diagramm und eines Ansteuersignals gemäß einer dritten Ausführungsform der vorliegenden Erfindung in einem unteren Diagramm. In den Diagrammen sind die Ansteuerpulse über der Zeit t aufgetragen. Im oberen Diagramm ist ein Ansteuersignal mit drei Ansteuerpulsen P1, P2, P3 aufgetragen, wobei die zeitlichen Abstände TP zwischen den einzelnen Ansteuerpulsen gleich groß ist. Die zeitliche Länge der Ansteuerpulse wird durch gewünschte Leistung festgelegt und ist bei allen Pulsen gleichgroß.

Im unteren Diagramm ist ebenfalls ein Ansteuersignal dargestellt, wobei mehrere Ansteuerpulse P1, P2, P3 usw. dargestellt sind. Der Unterschied zum Ansteuersignal des oberen Diagramms besteht darin, dass die zeitlichen Abstände TP1, TP2, TP3, TP4, TP5 zwischen den einzelnen Pulsen P1, P2, P3, P4, P5, P6 variiert. Die Variation der zeitlichen Abstände sind in der Weise ausgeführt, dass eine Frequenz über den regulären Ansteuersignal erhöht ist und zudem vorzugsweise die Geräuschentwicklung des Elektromotors 17 und/oder der Stellglieder 18,19, 20 reduziert oder in ein Schallemissionsspektrum des Fahrzeugs und/oder die Umgebung verschoben ist. Auf diese Weise wird die Durchführung der Ansteuerung des Elektromotors 17 für einen Benutzer des Fahrzeugs 10 reduziert. Die zeitliche Länge der einzelnen Pulse P1, P2, P3, P4, P5, P6 hängt von der mittleren gewünschten Leistung des Elektromotors ab und berechnet sich aus der Anzahl der Pulse und der zeitlichen Abstände der Pulse.

Die Art und Weise, wie die zeitlichen Abstände zwischen den einzelnen Ansteuerpulsen festgelegt wird, kann entweder mithilfe von Tabellen und/oder mithilfe von einzelnen Daten und abgelegten Berechnungsfunktionen vom Steuergerät 11 ermittelt werden.

Eine weitere Anwendung kann in der Benutzung eines elektronischen Stabilitätsprogramms (ESP) bestehen, wenn das ESP-Programm beispielsweise bei Fahren über eine eisglatte Fahrbahn häufig, aber mit geringer Leistung des Bremssystems erfolgt. Auch bei dieser Anwendung kann die Variation der zeitlichen Abstände der einzelnen Ansteuerpulse vorteilhaft durchgeführt werden, um die Geräuschentwicklung des Bremssystems bei der Durchführung des ESP-Programms zu reduzieren. Beispielsweise kann als Stellglied auch ein hydraulisches Pumpsystem vorgesehen sein, dessen Geräuschentwicklung vorteilhaft über die Variation der zeitlichen Abstände der Ansteuerpulse des Elektromotors, der wiederum Ventile des hydraulischen Pumpsystems ansteuert, reduziert werden.

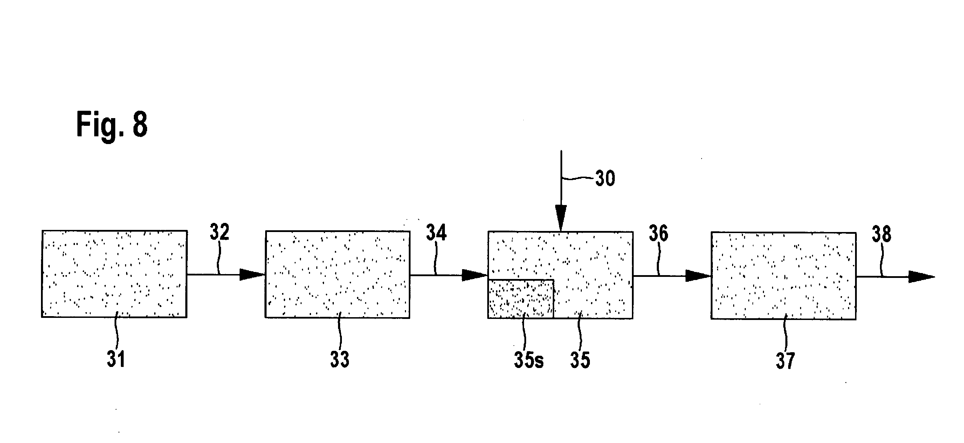

Figur 8 zeigt ein schematisches Blockschaltbild einer Motoransteuerung gemäß einer vierten Ausführungsform der vorliegenden Erfindung.

In dieser vierten Ausführungsform werden die Ansteuerimpulse mit einem Soll-Tastverhältnis 30 und zeitlich variierenden Pulsweiten und Pulsabständen in Abhängigkeit eines gemessenen Umgebungsgeräuschpegels moduliert.

Hierzu wird über eine entsprechende Umgebungsgeräuschpegel-Messeinrichtung 31, z. B. ein Mikrophon, der Umgebungsgeräuschpegel 32 erfasst und zur Ermittlung des Umgebungsgeräuschspektrums an eine Ermittlungseinrichtung 33 übermittelt.

Das ermittelte Umgebungsgeräuschspektrum 34 und das Soll-Tastverhältnis 30 werden zur Selektion eines entsprechenden Ansteuerspektrums aus einem Datenspeicher 35s an eine entsprechende Selektionseinrichtung 35 übermittelt. Das ausgelesene Ansteuerspektrum 36 wird zum Festlegen einer entsprechenden Ansteuerfrequenz an eine Festlegungseinrichtung 37 übermittelt. Die Ansteuerfrequenz 38 wird von der Festsetzungseinrichtung 37 an das Motorrelais übermittelt.

Alternativ könnte die Selektionseinrichtung 35 auch eine Berechnung des Ansteuerspektrums 36 durchführen.

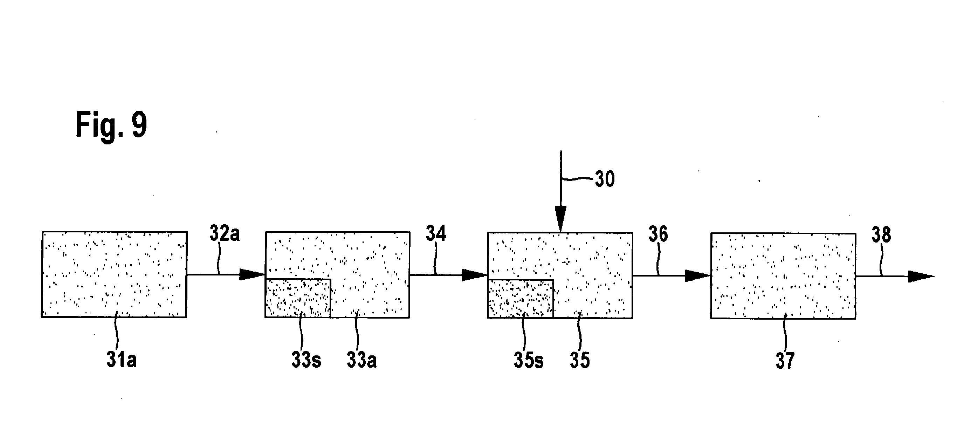

Figur 9 zeigt ein schematisches Blockdiagramm einer Motoransteuerung gemäß einer fünften Ausführungsform der vorliegenden Erfindung. Diese unterscheidet sich von dem vierten Ausführungsbeispiel gemäß Figur 8 in folgender Hinsicht.

In dieser fünften Ausführungsform werden die Ansteuerimpulse mit einem Soll-Tastverhältnis 30 und zeitlich variierenden Pulsweiten und Pulsabständen in Abhängigkeit eines mittelbar erfassten Umgebungsgeräuschpegels moduliert. Hierzu wird über einen entsprechenden Positionssensor 31a die aktuelle geografische Position 32a erfasst und diese an eine Geräuschpegelschätzeinrichtung 33a übermittelt. In einem Datenspeicher 33s sind positionsabhängige Geräuschparameter (positionstypischer Geräuschpegel der Umgebung oder Straßenbelag) hinterlegt.

Ausgehend von den hinterlegten positionsabhängigen Geräuschparametern wird ein betreffendes Umgebungsgeräuschspektrum 34 zusammen mit dem Soll-Tastverhältnis 30 an die Selektionseinrichtung 35 übermittelt.

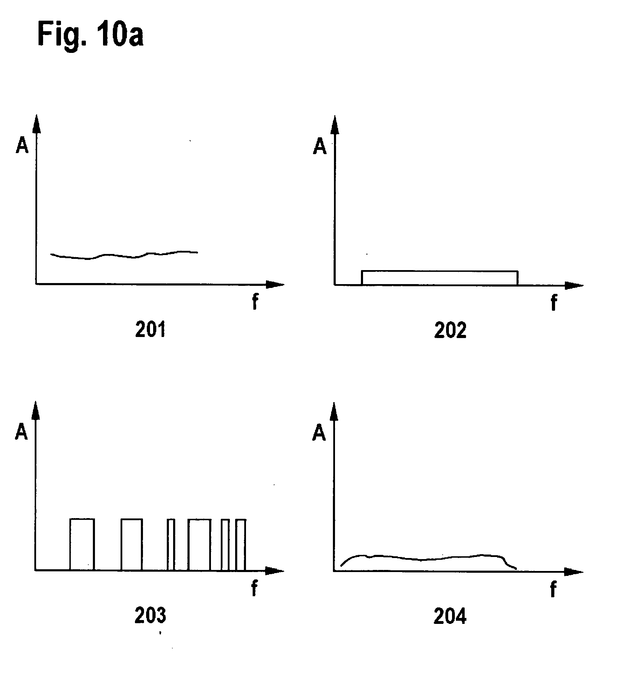

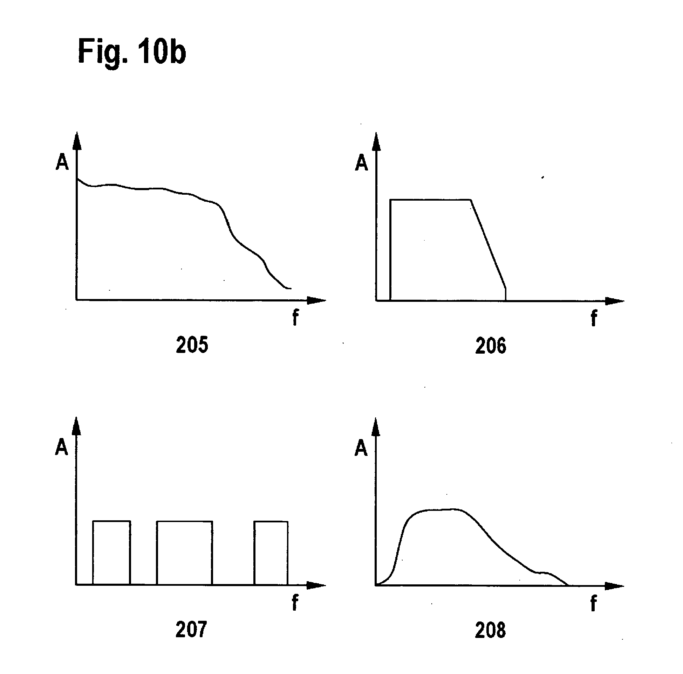

Figuren 10 a,b zeigen zum Vergleich Parameter unterschiedlicher Umgebungsgeräuschprofile und daraus abgeleitete Ansteuerspektren. Figur 10a beschreibt Umgebungsgeräuschprofil "langsame Fahrt". Figur 10b beschreibt Umgebungsgeräuschprofil "schnelle Fahrt".

Diagramm 201 zeigt einen gemessenen oder geschätzten Umgebungsgeräuschpegel mit leicht variierender, niedriger Amplitude. Diagramm 202 zeigt ein daraus abgeleitetes, vorteilhaftes Ansteuerspektrum des Elektromotors. Diagramm 203 zeigt die entsprechend generierte Ansteuersequenz, wobei die Pulsweiten und die Pulsabstände so variiert werden, dass das erzeugte Geräuschemissionsspektrum niedriger als das aktuell gemessene Umgebungsgeräuschspektrum ist, wie im Diagramm 204, das ein zugehöriges Abstrahlspektrum zeigt, ersichtlich.

Diagramm 205 einen gemessenen oder geschätzten Umgebungsgeräuschpegel im Umgebungsgeräuschprofil "schnelle Fahrt" mit leicht variierender, hoher Amplitude die mit erhöhter Frequenz steil abfällt. Diagramm 206 zeigt ein vorteilhaftes Ansteuerspektrum des Elektromotors für diesem Fall. Diagramm 207 zeigt eine entsprechend generierte Ansteuersequenz mit variierenden Pulsweiten und Pulsabständen. Die Ansteuersequenz weist entsprechend dem Umgebungsgeräuschprofil erhöhte Pulsweiten und Pulsabstände auf. Dies führt zu einer erhöhten Geräuschemission, die jedoch unterhalb des aktuell gemessenen Umgebungsgeräuschpegels liegt, wie in Diagramm 208, das das Abstrahlspektrum zeigt, ersichtlich.

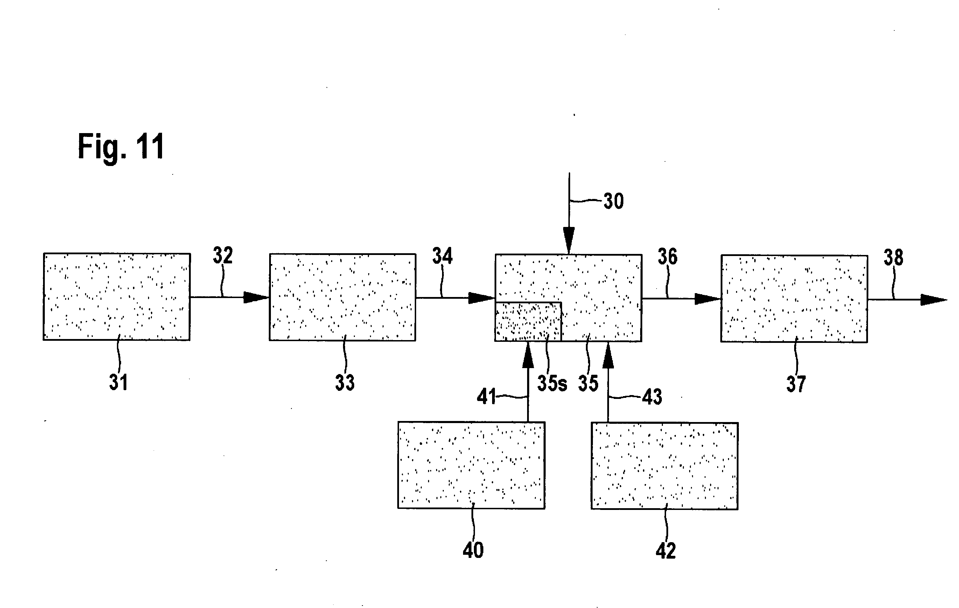

Figur 11 zeigt ein schematisches Blockschaltbild einer Motoransteuerung gemäß einer sechsten Ausführungsform der vorliegenden Erfindung, die sich gegenüber der vierten bzw. fünften Ausführungsform in folgenden Punkten unterscheidet.

Das Selektieren des Ansteuerspektrums 35 erfolgt gemäß der beschriebenen vierten oder fünften Ausführungsform, jedoch zusätzlich in Abhängigkeit eines Lastparameters 41 (z.B. Strom mal Versorgungsspannung) des Elektromotors und/oder der Temperatur im Motorpfad. Hierzu ist eine Einrichtung zur Messung oder Berechnung der Lastsituation 40 im Motor vorgesehen. Zur Ermittlung des thermischen Zustands im Motorpfad ist eine Temperaturmesseinrichtung 42 zur Erfassung der Temperatur und Ausgabe eines entsprechenden Signals 43 vorgesehen.

Dadurch können allerdings in Situationen bei niedriger thermischer Belastung oder bei niedriger mechanischer Belastung bessere Geräuschanpassungen als in Situationen bei hoher thermischer Belastung oder bei hoher mechanischer Belastung erzielt werden.

Bevorzugte Anwendungen der oben erwähnten Ausführungsformen im KFZ sind beispielsweise Fensterheber, Vakuumpumpen, Scheibenwischer, Benzinpumpen, Lüftermotoren, Niveauregelung, Elektroheizung, Hybridsteuerung etc.

**Patentansprüche**

1.  Verfahren zum Ansteuern eines Elektromotors mittels Pulsweitenmodulation mit folgenden Schritten.

    1) Erfassen wenigstens eines Parameters, der das während der Ansteuerung vorliegende Spektrum von Umgebungsgeräuschen des Elecktromotors repräsentiert oder beeinflusst; (1)
    2) Erzeugen von Ansteuerpulsen mit einem Soll-Tastverhältnis und zeitlich variierenden Pulsweiten und Pulsabständen in Abhängigkeit von dem erfassten Parameter, und (2)
    3) Ansteuern des Elektromotors mittels der Ansteuerpulse;

    **dadurch gekennzeichnet, dass** der Parameter ein Betriebsparameter einer Brennkraftmaschine oder eines Fahrzeugs ist.

2.  Verfahren nach Anspruch 1, wobei die Ansteuerpulse mit den zeitlich variierenden pulsweiten und Pulsabständen (PP1, TP2, TP3, TP4, TP5) entsprechend einer vorgegebenen Verteilung, die durch den erfassten Parameter vorgegeben ist, erzeugt werden.

3. Verfahren nach Anspruch 1 oder 2, wobei die Ansteuerpulse mit den zeitlich variierenden Pulsweiten und Pulsabständen derart erzeugt werden, dass das durch das mittels der Ansteuerpulse erzeugte Schallemissionsspektrum bei einer Zerlegung in Frequenzkomponenten derart beschaffen ist, dass die Frequenkomponenten kleinere Amplituden aufweisen als die entsprechenden Frequenkoponenten des Spektrums von Umgebungsgeräuschen des Elektromotors.

4. Verfahren nach einem der vorhergehenden Ansprüche, wobei die Pulsweiten und die Pulsabstände so variiert werden, dass ein durch das, Ansteuern des Elektromotors mittels der Ansteuerpulse erzeugtes schalleinissionsspektrum einem Spektrum von Umgebungsgeräuschen angenähert wird.

5. Verfahren nach einem der vorhergehenden Ansprüche, wobei die Pulsweiten und die Pulsabstände so variiert werden, dass ein durch das Ansteuern des Elektromotors mittels der Ansteuepulse erzeugtes Schallemissionsspcktrum einem Fahr- und/oder Abrollgeräusch eines Fahrzeugs entspricht

6. Verfahren nach Anspruch 1, wobei als Betriehsparameter eine Drehzahl eines Antriebes der Brennkraftmaschine, oder eine Geschwindigkeit, des Fahrzeuges oder eine Beschleunigung des Fahrzeuges verwendet wird.

7. Verfahren nach Anspruch 1, wobei als Betriebsparameter das Ausführen einer ESP- oder ABS-Steuerung verwender wird.

8. Verfahren nach Anspruch 1, wobei als Betriebsparameter das Ausführen einer festgelegten, Funktion, insbesondere eine Komfortfunktion, verwendet wird.

9. Verfahren nach einem der Ansprüche 1 bis 8 wobei das Variieren der Pulsweiten und der Pulsabstände abhängig von einer Leistungsanforderung des Motors und/oder der thermischen Belastung seiner Komponenten und/oder seiner Ansteuerung durchgeführt wird.

10. Verfahren nach Anspruch 9, wobei das Variieren der Pulsweiten und der Pulsabstände nur durchgeführt wird, wenn das Ansteuern weniger als eine festgelegte Leistung vom Elektromotor erfordert.

11. Verfahren nach einem der Ansprüche 1 bis 10, ferner mit folgendem Schritt:

Auslesen mindestens eines Datums aus einem Datenspeicher, wobei das mindestens eine Datum die zeitliche Variation der Pulsweiten und Pulsabstände bestimmt

12. Verfahren nach einem der Ansprüche 1 bis 11, ferner mit folgendem Schritt; Erfassen des Soll-Tastverhältnisses.

13. Vorrichtung zum Ansteuern eines Elektromotors mittels Pulsweitenmodulation mit:

einer Einrichtung zum Erzeugen von Ansteuerpulsen mit einem Soll-Tastverhältnis und zeitlich variierenden Pulsweiten und Pulsabständen (TP1, TP2, TP3, TP4, TP5), **dadurch gekennzeichnet, dass** die Vorrichtung einen Eingang zum Empfangen eines Betriebsparameters einer ßrennkraftmaschine oder eines Fahrzeugs aufweist, wobei die Vorrichtung ausgebildet ist, die Pulsweiten und Pulsabstände (TP1, TP2, TP3, TP4, TP5) abhängig von dem ßetriehsparameter zu variieren.

14. Vorrichtung nach Anspruch 12, wobei

die Einrichtung zum Erzeugun eine Einrichtung zum Vorgeben der Variation der Pulsweite und Pulsabstände, eine Einrichtung zum Bereitstellen der Ansteuerpulse und einen Motorschalter zum Schalten von elektrischer Leistung für den Elektromotor umfasst.

15. Vorrichtung nach einem der Ansprüche 13, oder 14, ferner mit eineim Datenspeicher, in dem Daten zum Bestimmen der zeitlichen Variation der Pulsweiten und Pulsabstände abgelegt sind.

16. Vorrichtung nach Anspruch 15, wobei die Daten in Form einer Look-Up-Tabelle in dem Datenspeicher abgelegt sind.

17. Vorrichtung nach einem der Ansprüche 13, bis 16, ferner mit einem Eingang zum Empfangen eines thermischen Parameters entsprechend einer Leistungsaforderung des Motors und/oder der thermischen Belastung seiner Komponenten und/oder seiner Ansteuerung, wobei die Vorrichtung dazu ausgebildet ist, die Pulsweiten und der Pulsabstände abhängig von dem thermischen Parameter durchzuführen.

**18.** Vorrichtung nach einem der Ansprüche 13, bis 17, ferner mit:

einer Einrichtung zum Erfassen des Soll-Tastverhältnisses anhand eines entsprechenden Erfassungssignals.

**Claims**

**1.** Method for controlling an electric motor by means of pulse-width modulation, having the following steps:

1) detection of at least one parameter which represents or influences the spectrum, which is present during the control process, of environmental noise of the electric motor; (1)
2) production of control pulses with a nominal duty ratio and pulse widths and pulse intervals which vary over time, as a function of the detected parameter, and (2)
3) control of the electric motor by means of the control pulses;

**characterized in that** the parameter is an operating parameter of an internal combustion engine or of a vehicle.

**2.** Method according to Claim 1, wherein the control pulses are produced with pulse widths and pulse intervals (TP1, TP2, TP3, TP4, TP5) which vary over time, corresponding to a predetermined distribution, which is predetermined by the detected parameter.

**3.** Method according to Claim 1 or 2, wherein the control pulses are produced with the pulse widths and pulse intervals which vary over time such that the sound emission spectrum produced by means of the control pulses is created, when broken down into frequency components, such that the frequency components have smaller amplitudes than the corresponding frequency components of the spectrum of environmental noise of the electric motor.

**4.** Method according to one of the preceding claims, wherein the pulse widths and the pulse intervals are varied such that a sound emission spectrum which is produced by controlling the electric motor by means of the control pulses approximates to a spectrum of environmental noise.

**5.** Method according to one of the preceding claims, wherein the pulse widths and the pulse intervals are varied such that a sound emission spectrum which is produced by controlling the electric motor by means of the control pulses corresponds to a driving noise and/or rolling noise of a vehicle.

**6.** Method according to Claim 1, wherein a rotation speed of a drive of the internal combustion engine, or a speed of the vehicle, or an acceleration of the vehicle, is used as an operating parameter.

**7.** Method according to Claim 1, wherein the process of carrying out ESP or ABS control is used as an operating parameter.

**8.** Method according to Claim 1, wherein carrying out a defined function, in particular a convenience function is used as an operating parameter.

**9.** Method according to one of Claims 1 to 8, wherein the pulse widths and the pulse intervals are varied as a function of a power demand of the motor and/or the thermal load on its components and/or its control.

**10.** Method according to Claim 9, wherein the pulse widths and the pulse intervals are varied only when the control process requires less than a defined power from the electric motor.

**11.** Method according to one of Claims 1 to 10, furthermore having the following step:

reading at least one data item from a data memory, wherein the at least one data item defines the time variation of the pulse widths and pulse intervals.

**12.** Method according to one of Claims 1 to 11, furthermore having the following step:

detection of the nominal duty ratio.

13. Apparatus for controlling an electric motor by means of pulse-width modulation having:

a device for producing control pulses with a nominal duty ratio and pulse widths and pulse intervals (TP1, TP2, TP3, TP4, TP5) which vary over time, **characterized in that** the apparatus has an input for receiving an operating parameter from an internal combustion engine or from a vehicle, wherein the apparatus is designed to vary the pulse widths and pulse intervals (TP1, TP2, TP3, TP4, TP5) as a function of the operating parameter.

14. Apparatus according to Claim 13, wherein
the device for production comprises a device for predetermining the variation of the pulse widths and pulse intervals, a device for producing the control pulses and a motor switch for switching electrical power for the electric motor.

15. Apparatus according to one of Claims 13 or 14, furthermore having a data memory in which data is stored for defining the time variation of the pulse widths and pulse intervals.

16. Apparatus according to Claim 15, wherein the data is stored in the form of a Look-Up Table in the data memory.

17. Apparatus according to one of Claims 13 to 16, furthermore having an input for receiving a thermal parameter corresponding to a power demand of the motor and/or the thermal load of its components and/or its control, wherein the apparatus is designed to vary the pulse widths and pulse intervals as a function of the thermal parameter.

18. Apparatus according to one of Claims 13 to 17, furthermore having:

a device for detecting the nominal duty ratio on the basis of a corresponding detection signal.

**Revendications**

1. Procédé de commande d'un moteur électrique par modulation de la largeur d'impulsions, le procédé comportant les étapes suivantes :

1) détection d'au moins un paramètre qui représente ou influence le spectre, présent pendant la commande, des bruits de l'environnement du moteur électrique, (1),
2) formation d'impulsions de commande à un taux d'échantillonnage de consigne, les impulsions ayant une largeur et un écart entre les impulsions qui varient temporellement en fonction du paramètre détecté et (2)
3) commande du moteur électrique au moyen des impulsions de commande,

**caractérisé en ce que**
le paramètre est un paramètre de fonctionnement d'un moteur à combustion interne ou d'un véhicule.

2. Procédé selon la revendication 1, dans lequel les impulsions de commande dont les largeurs d'impulsion et les écarts (TP1, TP2, TP3, TP4, TP5) entre les impulsions varient temporellement sont formées en correspondance à une répartition prédéterminée par le paramètre détecté.

3. Procédé selon les revendications 1 ou 2, dans lequel les impulsions de commande dont les largeurs d'impulsion et les écarts entre les impulsions varient temporellement sont formées de telle sorte que le spectre d'émission de bruit formé au moyen des impulsions de commande est formé par décomposition en composantes de fréquences de telle sorte que les composantes de fréquences présentent des amplitudes plus petites que les composantes de fréquences correspondantes du spectre du bruit de l'environnement du moteur électrique.

4. Procédé selon l'une des revendications précédentes, dans lequel les largeurs d'impulsions et les écarts entre les impulsions sont modifiés de telle sorte que le spectre d'émission de bruit formé par la commande du moteur électrique au moyen des impulsions de commande approche le spectre des bruits de l'environnement.

5. Procédé selon l'une des revendications précédentes, dans lequel les largeurs d'impulsions et les écarts entre les impulsions sont modifiés de telle sorte que le spectre d'émission de bruits formé par la commande du moteur électrique au moyen des impulsions de commande corresponde au bruit de déplacement et/ou de roulement d'un véhicule.

6. Procédé selon la revendication 1, qui utilise comme paramètre de fonctionnement le régime de rotation de l'entraînement du moteur à combustion interne, la vitesse du véhicule ou l'accélération du véhicule.

7. Procédé selon la revendication 1, qui utilise comme paramètre de fonctionnement l'exécution d'une commande ESP ou ABS.

8. Procédé selon la revendication 1, qui utilise comme paramètre de fonctionnement l'exécution d'une fonction définie, en particulier d'une fonction de confort.

9. Procédé selon l'une des revendications 1 à 8, dans lequel la variation temporelle des largeurs d'impulsion et des écarts entre les impulsions est exécutée en fonction de la demande de puissance du moteur, de la charge thermique de ses composants et/ou de sa commande.

10. Procédé selon la revendication 8, dans lequel la variation temporelle des largeurs d'impulsion et des écarts entre les impulsions n'est exécutée que si la commande demande moins qu'une puissance définie au moteur électrique.

11. Procédé selon l'une des revendications 1 à 10, qui présente en outre l'étape suivants :

lecture d'au moins une donnée dans une mémoire de données, la ou les données définissant la variation temporelle des largeurs d'impulsion et des écarts entre les impulsions.

12. Procédé selon l'une des revendications 1 à 11, qui présente en outre l'étape suivants :

détection du taux d'échantillonnage de consigne.

13. Dispositif de commande d'un moteur électrique au moyen d'une modulation de la largeur d'impulsions, et présentant :

un dispositif qui forme des impulsions de commande à un taux d'échantillonnage de consigne, à des largeurs d'impulsion et des écarts (TP1, TP2, TP3, TP4, TP5) entre les impulsions qui varient temporellement, **caractérisé en ce que**
le dispositif présente une entrée de réception d'un paramètre de fonctionnement d'un moteur à combustion interne d'un véhicule, le dispositif étant configuré pour faire varier temporellement les largeurs d'impulsion et les écarts (TP1, TP2, TP3, TP4, TP5) entre les impulsions en fonction du paramètre de commande.

14. Dispositif selon la revendication 13, le dispositif comprenant pour former un dispositif qui définit la variation temporelle des largeurs d'impulsion et des écarts entre les impulsions, un dispositif qui forme les impulsions de commande et un commutateur de moteur qui commute la puissance électrique du moteur électrique.

15. Dispositif selon l'une des revendications 13 ou 14, et présentant en outre une mémoire de données dans laquelle des données qui définissent la variation temporelle des largeurs d'impulsion et des écarts entre les impulsions sont conservées.

16. Dispositif selon la revendication 15, dans lequel les données sont déposées dans la mémoire de données sous la forme d'un tableau de consultation.

17. Dispositif selon l'une des revendications 13 à 16, doté en outre d'une entrée de réception d'un paramètre thermique qui correspond à la puissance demandée au moteur, à la charge thermique de ses composants et/ou à sa commande, le dispositif étant configuré pour exécuter les largeurs d'impulsion et les écarts entre les impulsions en fonction du paramètre thermique.

18. Dispositif selon l'une des revendications 13 à 17, présentant en outre un dispositif de détection du taux d'échantillonnage de consigne à l'aide d'un signal de détection approprié.

**Fig. 1**

EP 2 040 360 B1

## Fig. 2A

## Fig. 2B

## Fig. 4A

# Fig. 3B

Fig. 3A

Fig. 4B

# Fig. 5

# Fig. 6

# Fig. 7

# Fig. 8

EP 2 040 360 B1

Fig. 9

EP 2 040 360 B1

# Fig. 10a

201

202

203

204

# Fig. 10b

205

206

207

208

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006191756 A
- DE 102007003737 A1
- DE 3539558 A1
- EP 1067668 A2